# EUROPEAN PATENT APPLICATION

(11) **EP 3 220 055 A1**
(43) Date of publication of application: **20.09.2017**
(21) Application number: 17160602.3
(22) Date of filing: 13.03.2017
(51) Int. Cl.: F23R 3/34

(54) **AXIALLY STAGED FUEL INJECTOR ASSEMBLY**

(30) Priority: 18.03.2016 US 201615073694
(71) Applicant: General Electric Company, Schenectady, NY 12345 (US)
(72) Inventor: CAI, Jun, Greenville, SC South Carolina 29615-4614 (US); KARIM, Hasan, Greenville, SC South Carolina 29615-4614 (US); STOIA, Lucas John, Greenville, SC South Carolina 29615-4614 (US); POSCHEL, William Michael, Greenville, SC South Carolina 29615-4614 (US); NATARAJAN, Jayaprakash, Greenville, SC South Carolina 29615-4614 (US)
(74) Representative: Lee, Brenda

(57) **Abstract**

A fuel injector assembly 102 includes a shroud 116 defining a fuel manifold 122 therein. The fuel manifold 122 is fluidly coupled to a fuel line 106 to receive a fuel therefrom. The fuel injector assembly 102 further includes a center body 118 and a plurality of vanes 120 operatively coupling the center body 118 to the shroud 116. Each vane 120 of the plurality of vanes 120 is circumferentially spaced from circumferentially adjacent vanes 120 to define at least one passage 124 therebetween for routing of air therethrough. Each of the plurality of vanes 120 has at least one outlet hole 128 in fluid communication with the fuel manifold 122 and at least one passage 124 of the at least one passage 124 for expulsion of the fuel into the at least one passage 124 for mixing with the air. A fuel injector outlet is defined by an inner wall of the fuel injector assembly 102 and positioned to direct a fuel-air mixture out of the fuel injector assembly 102.

## Description

### FIELD OF THE TECHNOLOGY

The subject matter disclosed herein relates to a fuel injector, such as an axially staged fuel injector that is used in a gas turbine engine.

### BACKGROUND

Gas turbines usually burn hydrocarbon fuels and produce air polluting emissions such as oxides of nitrogen (NOx) and carbon monoxide (CO). Oxidization of molecular nitrogen in the gas turbine depends upon the temperature of gas located in a combustor, as well as the residence time for reactants located in the highest temperature regions within the combustor. Thus, the amount of NOx produced by the gas turbine may be reduced by either maintaining the combustor temperature below a temperature at which NOx is produced, or by limiting the residence time of the reactant in the combustor.

One approach for controlling the temperature of the combustor involves pre-mixing fuel and air to create a fuel-air mixture prior to combustion. This approach may include the axial staging of fuel injection where a first fuel-air mixture is injected and ignited at a first or primary combustion zone of the combustor to produce a main flow of high energy combustion gases, and where a second fuel-air mixture is injected into and mixed with the main flow of high energy combustion gases downstream from the primary combustion zone. Specifically, the second fuel-air mixture becomes entrained with the main flow of high energy combustion gases before ignition in an approach that may be referred to as axially staged injection.

Axially staged injection increases the likelihood of complete combustion of available fuel, which in turn reduces the air polluting emissions. Bypassing air from a head end portion of the combustor for use in an axially staged injector modifies the head end temperature to reduce carbon monoxide production during part-load operation. To achieve the above-described benefits associated with axially staging the fuel injection, the second air and fuel mixture must be sufficiently mixed or blended prior to injection into the combustor. Challenges with sufficient mixing persist.

### BRIEF DESCRIPTION OF THE TECHNOLOGY

Aspects and advantages are set forth below in the following description, or may be obvious from the description, or may be learned through practice.

One embodiment of the present disclosure is a fuel injector assembly. The fuel injector assembly includes a shroud defining a fuel manifold therein. The fuel manifold is fluidly coupled to a fuel line to receive a fuel therefrom. The fuel injector assembly further includes a center body and a plurality of vanes operatively coupling the center body to the shroud. The plurality of vanes is circumferentially spaced from each other to define at least one passage therebetween for routing of air therethrough. Each of the plurality of vanes has at least one outlet hole that is in fluid communication with the fuel manifold and at least one passage of the at least one passage for expulsion of the fuel into the at least one passage for mixing with the air. A fuel injector outlet is defined by an inner wall of the fuel injector assembly and is positioned to direct a fuel-air mixture out of the fuel injector assembly.

Another embodiment of the present disclosure is directed to an axially staged fuel injection system. The system includes a fuel line comprising a pre-orifice disposed within the fuel line at a location upstream from an outlet of the fuel line. The pre-orifice includes an orifice cross-sectional area that is less than a main cross-sectional area of the fuel upstream from the pre-orifice. The system further includes a fuel injector assembly. The fuel injector assembly includes a shroud defining a fuel manifold therein where the fuel manifold is in fluid communication with the fuel line to receive a fuel therefrom. The fuel injector assembly further includes a center body that defines a channel that extends axially along an entire length of the center body for routing a purge airflow therethrough. A plurality of vanes operatively couples the center body to the shroud. Each vane of the plurality of vanes is circumferentially spaced from circumferentially adjacent vanes to define at least one passage therebetween for routing of air therethrough. Each of the plurality of vanes includes at least one outlet hole that is in fluid communication with the fuel manifold and the at least one passage. The outlet hole(s) expel the fuel into the at least one passage for mixing with the air. The fuel injector assembly also includes a fuel injector outlet defined by an inner wall of the fuel injector assembly and positioned to direct a fuel-air mixture out of the fuel injector assembly and a converging region of the inner wall located proximate the fuel injector outlet.

Another embodiment includes a gas turbine engine. The gas turbine engine includes a compressor, a turbine and a combustor including an axially staged fuel injector assembly. The fuel injector assembly includes a shroud defining a fuel manifold therein. The fuel manifold is fluidly coupled to a fuel line to receive a fuel therefrom. The fuel injector assembly further includes a center body and a plurality of vanes operatively coupling the center body to the shroud. Each vane of the plurality of vanes is circumferentially spaced from circumferentially adjacent vanes so as to define at least one passage therebetween for routing of air therethrough. Each of the plurality of vanes has at least one outlet hole in fluid communication with the fuel manifold for expulsion of the fuel into the at least one passage for mixing with the air. The fuel injector assembly further includes a fuel injector outlet defined by an inner wall of the fuel injector assembly and positioned to direct a fuel-air mixture out of the fuel injector assembly.

Those of ordinary skill in the art will better appreciate the features and aspects of such embodiments, and others, upon review of the specification.

### BRIEF DESCRIPTION OF THE DRAWINGS

A full and enabling disclosure of the various embodiments, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present disclosure;
FIG. 2 is a simplified cross-section side view of an exemplary combustor as may incorporate various embodiments of the present disclosure;
FIG. 3 is a cross-sectional view of a fuel injector assembly of the combustor as shown in FIG. 2, according to at least one aspect of the present disclosure;
FIG. 4 is a top perspective view of the fuel injector assembly of FIG. 3;
FIG. 5 is a cross-sectional view of the fuel injector assembly of FIG. 3; and
FIG. 6 is a cross-sectional end view of the fuel injector assembly of FIG. 3 installed in the combustor.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, and the term "axially" refers to the relative direction that is substantially parallel and/or coaxially aligned to an axial centerline of a particular component.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation, not limitation. In fact, it will be apparent to those skilled in the art that modifications and variations can be made without departing from the scope or spirit thereof. For instance, features illustrated or described as part of one embodiment may be used on another embodiment to yield a still further embodiment. Thus, it is intended that the present disclosure covers such modifications and variations as come within the scope of the appended claims and their equivalents. Although exemplary embodiments of the present disclosure will be described generally in the context of a combustor for a land-based power-generating gas turbine for purposes of illustration, one of ordinary skill in the art will readily appreciate that embodiments of the present disclosure may be applied to any style or type of combustor for a turbomachine and are not limited to combustors or combustion systems for land-based power-generating gas turbines unless specifically recited in the claims.

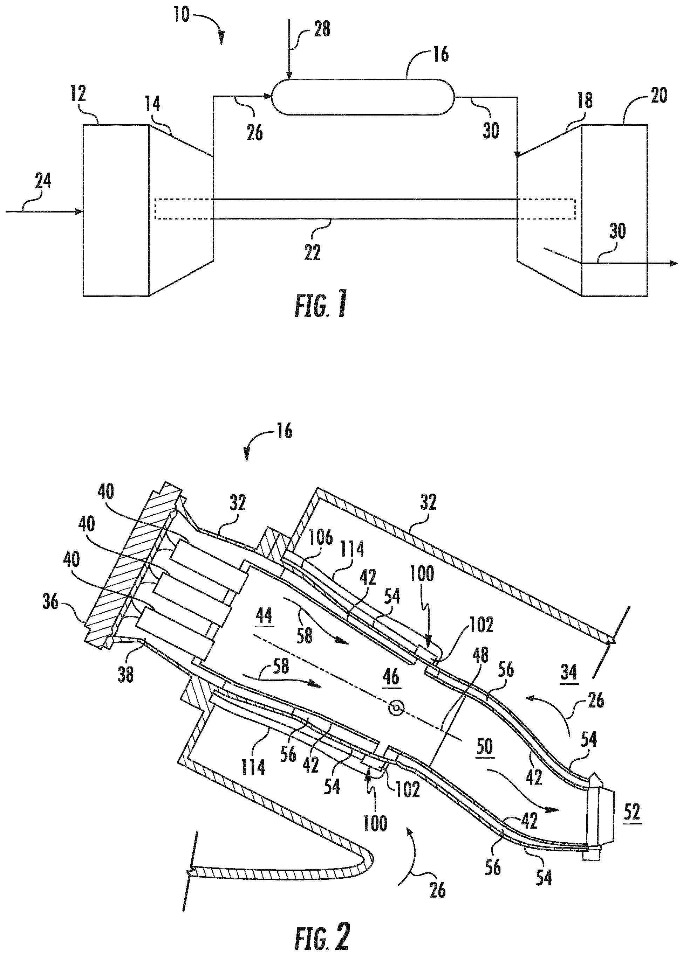

Referring now to the drawings, FIG. 1 illustrates a schematic diagram of an exemplary gas turbine 10. The gas turbine 10 generally includes an inlet section 12, a compressor 14 disposed downstream of the inlet section 12, at least one combustor 16 disposed downstream of the compressor 14, a turbine 18 disposed downstream of the combustor 16 and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, wherein energy (kinetic and/or thermal) is transferred from the combustion gases 30 to rotor blades (not shown), thus causing shaft 22 to rotate. The mechanical rotational energy may then be used for various purposes such as to power the compressor 14 and/or to generate electricity. The combustion gases 30 exiting the turbine 18 may then be exhausted from the gas turbine 10 via the exhaust section 20.

As shown in FIG. 2, the combustor 16 may be at least partially surrounded by an outer casing 32 such as a compressor discharge casing. The outer casing 32 may at least partially define a high pressure plenum 34 that at least partially surrounds various components of the combustor 16. The high pressure plenum 34 may be in fluid communication with the compressor 14 (FIG. 1) so as to receive the compressed air 26 therefrom. An end cover 36 may be coupled to the outer casing 32. In particular embodiments, the forward portion of the outer casing 32 and the end cover 36 may at least partially define a head end volume or portion 38 of the combustor 16. In particular embodiments, the head end portion 38 is in fluid communication with the high pressure plenum 34 and/or the compressor 14.

One or more primary fuel nozzles 40 extend axially downstream from the end cover 36. One or more liners or ducts 42 may at least partially define a primary or first combustion or reaction zone 44 for combusting the first fuel-air mixture and/or may at least partially define a secondary combustion or reaction zone 46 formed axially downstream from the first combustion zone 44 with respect to an axial centerline 48 of the combustor 16. The liner(s) 42 generally define a hot gas path 50 from the primary fuel nozzle(s) 40 to an inlet 52 of the turbine 18 (FIG. 1). The liner(s) 42 may be formed so as to include a tapering or transition portion.

In at least one embodiment, the combustor 16 includes an axially staged fuel injection system 100. The axially staged fuel injection system 100 includes at least one fuel injector assembly 102 axially staged or spaced from the primary fuel nozzle(s) 40 with respect to an axial centerline 48. The fuel injector assembly 102 is disposed downstream of the primary fuel nozzle(s) 40 and upstream of the inlet 52 to the turbine 18.

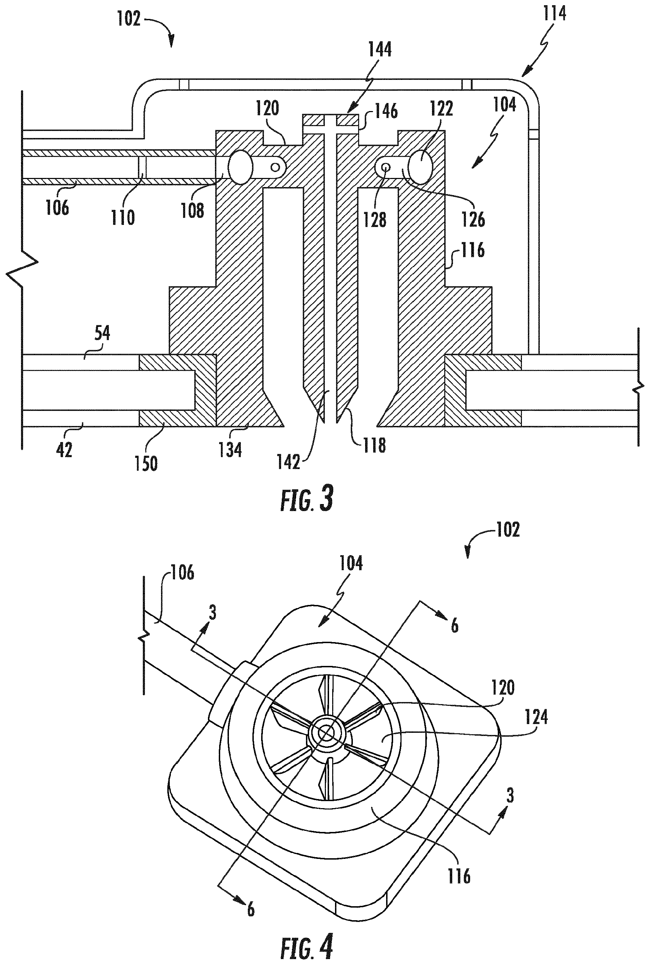

The fuel injector assembly 102 extends through the liner(s) 42 and is in fluid communication with the hot gas path 50. The fuel injector assembly 102 may have an opening that is flush with the liner(s) 42 surface (as shown in FIG. 3) or, alternately, the fuel injector assembly 102 may project through the liner(s) 42 toward the secondary combustion zone 46. It is to be understood that the fuel injector assembly 102 could also extend through a flow or impingement sleeve 54 that at least partially surrounds the liner(s) 42. In this configuration, the flow sleeve 54 and the liner(s) 42 may define an annular flow passage 56 therebetween. The annular flow passage 56 may provide or define a flow path between the high pressure plenum 34 and the head end portion 38 of the combustor 16.

It is contemplated that a number of fuel injector assemblies 102 (including two, three, four, five, or more fuel injector assemblies 102) may be used in a single combustor 16. The fuel injector assemblies 102 may be equally spaced about the perimeter of the liner(s) 42, or may be spaced at some other spacing to accommodate struts or other casing components.

For simplicity, the axially staged fuel injection system 100 is referred to, and illustrated herein, as having fuel injector assemblies 102 in a single stage, or axial plane, downstream of the primary combustion zone 44. However, it is contemplated that the axially staged fuel injection system 100 may include two axially spaced stages of fuel injector assemblies 102. For example, a first set of fuel injector assemblies 102 and a second set of fuel injector assemblies 102 may be axially spaced from one another along the liner(s) 42.

In operation, a primary combustion gas stream or main flow 58 of the combustion gases 30, which is created by the combustion of air and fuel from the primary fuel nozzles 40, travels through the primary combustion zone 44 to an area within the hot gas path 50 which is radially inboard of the fuel injector assembly 102 and upstream from the inlet 52 of the turbine 18. A second fuel-air mixture is injected by the one or more fuel injector assemblies 102 and penetrates the oncoming main flow 58. The fuel supplied to the fuel injector assembly 102 is combusted in the secondary combustion zone 46 before entering the turbine 18.

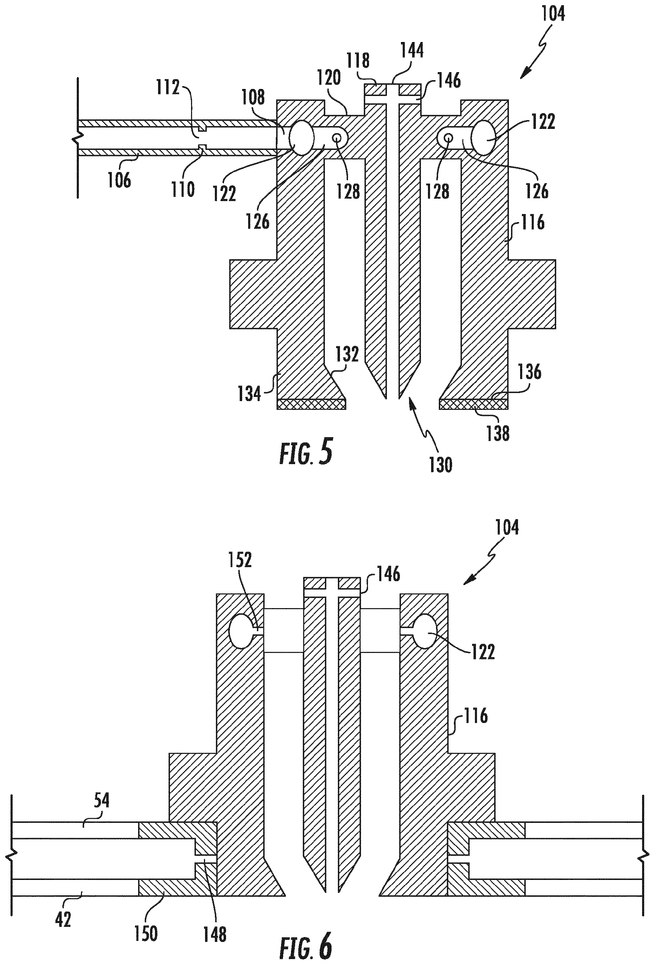

FIG. 3 illustrates the fuel injector assembly 102 in more detail according to at least one embodiment of the present disclosure. The fuel injector assembly 102 includes a fuel injector 104 fluidly coupled to a fuel line or conduit 106. The fuel injector 104 receives fuel via the fuel line 106 via an inlet port 108 of the fuel injector assembly 102. The cross-sectional area of the fuel line 106 may vary along the length thereof, with the smallest cross-sectional area being part of a pre-orifice structure 110 that has at least one fuel pre-orifice 112 (seen in FIG. 5) that is located upstream of the inlet port 108. The pre-orifice 112 may be formed to ensure that flow dynamics within the fuel line 106 are insensitive to upstream pressure pulses or variations in flow. In at least one embodiment, the fuel injector assembly 102 may also include a protective air shield 114 disposed radially outwardly of the fuel line 106 and the fuel injector 104, as discussed further below.

FIGS. 4 and 5 illustrate the fuel injector 104 in greater detail. As shown in FIGS. 4 and 5, a shroud 116 surrounds a center body 118 and a number of vanes 120 that extend between and operatively couple the shroud 116 and the center body 118. In one embodiment, the shroud 116 extends in a circle. As shown in FIG. 5, the shroud 116 defines a hollow interior region that is referred to as a fuel manifold 122. The fuel manifold 122 is fluidly coupled to the fuel line 106, such that the fuel manifold 122 receives the fuel therefrom. In one embodiment, the fuel manifold 122 extends completely around the shroud 116 to form a 360-degree fuel manifold 122. From the manifold 122, the fuel is routed to the vanes 120. As shown in FIG. 4, the vanes 120 are circumferentially spaced from each other to define a number of passages 124 therebetween. In addition, the fuel manifold 122 may include one or more openings 152 (FIG. 6) between the vanes 120 through which fuel may also be delivered. The passages 124 allow compressed air to be routed therethrough for mixing with the fuel from the vanes 120 and, optionally, from the manifold openings 152, as will be appreciated from the description herein.

In at least one embodiment as shown in FIG. 5, at least one of the vanes 120 defines a cavity 126 therein that receives fuel from the fuel manifold 122 in a uniformly distributed manner, particularly in embodiments where the fuel manifold 122 extends 360 degrees around the shroud 116. The fuel flows from the cavity 126 through one or more outlet holes 128 of each respective vane 120 for routing to the passages 124. Within the passages 124, the fuel is mixed with the compressed air being directed therethrough. The vanes 120 have a geometry that promotes swirling of the compressed air and that promotes mixing of the fuel-air mixture flowing through the passages 124. The swirling flow is directed toward, and ultimately out of, a fuel injector outlet 130 that is defined by an inner wall 132 of the fuel injector assembly 102. The fuel injector outlet 130 directs the fuel-air mixture out of the fuel injector 104 and into the secondary combustion zone 46.

The inner wall 132, which may be integral with the shroud 116, has a radially converging region 134 proximate the fuel injector outlet 130 to prevent flash back and to promote better injection penetration of the fuel-air mixture into the secondary combustion zone 46 by at least partially forming a venturi so as to accelerate the fuel-air mixture exiting the fuel injector outlet 130. In some embodiments, a radially innermost surface 136 of the inner wall 132 may be coated with a thermal barrier coating 138. The center body 118 may be tapered radially inwardly at an outlet end region 140 of the center body 118 to at least partially define a fuel-air mixture path with the inner wall 132 of the fuel injector assembly 102.

In at least one embodiment, a channel 142 extends along a central axis or axial centerline of the center body 118 and along an entire length of the center body 118 so as to define a passage therethrough. In operation, air from the high pressure plenum 34 may be directed into the air shield 114 (FIG. 3) and into the radially outward end of the injector 104. In one embodiment, the air flows in a radially inward direction through the channel 142 via an inlet 144 defined by the center body 118 and disposed at or proximate to a radially outer surface of the fuel injector 104. The channel 142 routes compressed air from the inlet 144 towards the fuel injector outlet 130 to purge the outlet region (that is, to push the fuel-air mixture toward the outlet 130), thereby reducing the potential for flashback through the fuel injector assembly 102.

In some embodiments, the inlet 144 to the channel 142 may be provided with purge holes or inlets 146 that are transverse to the channel 142. The channel 142 may be open or closed at the inlet 144. As described above with respect to channel 142, the air may flow through the transverse purge holes 146, which may be defined and/or circumferentially spaced about the inlet 144 of the center body 118.

FIG. 6 shows the fuel injector 104 as positioned between a portion of an exemplary liner 42 and a portion of an exemplary flow or impingement sleeve 54. As shown in FIG. 6, the fuel injector 104 may be mounted to one or both of the liner 42 and/or the impingement sleeve 54. In particular embodiments, a cooling hole or passage 148 is provided in an injector mounting boss 150 to direct cooling air toward the fuel injector 104 for cooling thereof. For example, the cooling air may be diverted form the annular passage 56 (FIG. 2).

The embodiments of the fuel injector assembly 102 described herein provide numerous advantages associated with reduced NOx production and turn down CO performance. This is achieved by uniform fuel distribution by the fuel manifold 122 for mixing with the compressed air. Mixing is performed in the passages and the vane structures cause a swirling flow of the fuel-air mixture prior to injection into the combustor. The swirling enhances mixing inside the fuel injector 104 and the crossflow mixing with the main or primary combustion gas flow 48 to rapidly reduce the flame temperature, thereby reducing NOx.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Various aspects and embodiments of the present invention are defined by the following numbered clauses:
1. A fuel injector assembly, comprising:
   a shroud defining a fuel manifold therein, wherein the fuel manifold is fluidly coupled to a fuel line to receive a fuel therefrom;
   a center body;
   a plurality of vanes operatively coupling the center body to the shroud, the plurality of vanes circumferentially spaced from each other to define at least one passage therebetween for routing of air therethrough, each of the plurality of vanes having at least one outlet hole in fluid communication with the fuel manifold and at least one passage of the at least one passage for expulsion of the fuel into the at least one passage for mixing with the air; and
   a fuel injector outlet defined by an inner wall of the fuel injector assembly and positioned to direct a fuel-air mixture out of the fuel injector assembly.
2. The fuel injector assembly of clause 1, wherein the fuel line comprises a main cross-sectional area and a pre-orifice structure disposed therein, the pre-orifice structure having an orifice cross-sectional area that is less than the main cross-sectional area.
3. The fuel injector assembly of any preceding clause, wherein the center body defines a channel along an entire length thereof for routing a purge air toward the fuel injector outlet.
4. The fuel injector assembly of any preceding clause, further comprising a converging region of the inner wall located proximate the fuel injector outlet.
5. The fuel injector assembly of any preceding clause, wherein a radially innermost surface of the injector is coated with a thermal barrier coating.
6. The fuel injector assembly of any preceding clause, wherein an outlet end region of the center body is angled radially inwardly.
7. The fuel injector assembly of any preceding clause, wherein the shroud comprises a circular geometry.
8. The fuel injector assembly of any preceding clause, wherein the fuel manifold extends circumferentially within the shroud.
9. An axially stage fuel injection system, comprising:
   a fuel line comprising a pre-orifice disposed within the fuel line at a location upstream an outlet of the fuel line, the pre-orifice having an orifice cross-sectional area that is less than a main cross-sectional area of the fuel upstream from the pre-orifice;
   a fuel injector assembly comprising:
      a shroud defining a fuel manifold therein, wherein the fuel manifold is in fluid communication with the fuel line to receive a fuel therefrom;
      a center body defining a channel extending axially along an entire length of the center body for routing a purge airflow therethrough;
      a plurality of vanes operatively coupling the center body to the shroud, the plurality of vanes circumferentially spaced from each other to define at least one passage therebetween for routing of air therethrough, each of the plurality of vanes having at least one outlet hole in fluid communication with the fuel manifold and the at least one passage for expulsion of the fuel into the at least one passage for mixing with the air;
      a fuel injector outlet defined by an inner wall of the fuel injector assembly and positioned to direct a fuel-air mixture out of the fuel injector assembly; and
      a converging region of the inner wall located proximate the fuel injector outlet.
10. The axially staged fuel injector system of any preceding clause, wherein a radially innermost surface of the fuel injector assembly is coated with a thermal barrier coating.
11. The axially staged fuel injector system of any preceding clause, wherein an outlet end of the center body is angled radially inwardly.
12. The axially staged fuel injector system of any preceding clause, wherein the shroud comprises a circular geometry.
13. The axially staged fuel injector system of any preceding clause, wherein the fuel manifold extends circumferentially within the shroud.
14. A gas turbine engine, comprising:
   a compressor;
   a turbine; and
   a combustor including a axially staged fuel injector assembly, the fuel injector assembly comprising:
      a shroud defining a fuel manifold therein, wherein the fuel manifold is fluidly coupled to a fuel line to receive a fuel therefrom;
      a center body;
      a plurality of vanes operatively coupling the center body to the shroud, the plurality of vanes circumferentially spaced from each other to define at least one passage therebetween for routing of air therethrough, each of the plurality of vanes having at least one outlet hole in fluid communication with the fuel manifold for expulsion of the fuel into the at least one passage for mixing with the air; and
      a fuel injector outlet defined by an inner wall of the fuel injector assembly and positioned to direct a fuel-air mixture out of the fuel injector assembly.
15. The gas turbine engine of any preceding clause, wherein the fuel line comprises a main cross-sectional area and a pre-orifice structure disposed therein, the pre-orifice structure having an orifice cross-sectional area that is less than the main cross-sectional area.
16. The gas turbine engine of any preceding clause, wherein the center body defines a channel along an entire length thereof for routing a purge air flow toward the fuel injector outlet.
17. The gas turbine engine of any preceding clause, further comprising a converging region of the inner wall of the fuel injector assembly located proximate the fuel injector outlet.
18. The gas turbine engine of any preceding clause, wherein a radially innermost surface of the injector is coated with a thermal barrier coating.
19. The gas turbine engine of any preceding clause, wherein the shroud of the fuel injector assembly comprises a circular geometry.
20. The gas turbine engine of any preceding clause, wherein the fuel manifold extends completely circumferentially within the shroud.

## Claims

1. A fuel injector assembly (102), comprising:
a shroud (116) defining a fuel manifold (122) therein, wherein the fuel manifold (122) is fluidly coupled to a fuel line (106) to receive a fuel therefrom;
a center body (118);
a plurality of vanes (120) operatively coupling the center body (118) to the shroud (116), the plurality of vanes (120) circumferentially spaced from each other to define at least one passage (124) therebetween for routing of air therethrough, each of the plurality of vanes (120) having at least one outlet hole (128) in fluid communication with the fuel manifold (122) and at least one passage (124) of the at least one passage (124) for expulsion of the fuel into the at least one passage (124) for mixing with the air; and
a fuel injector outlet (130) defined by an inner wall (132) of the fuel injector assembly (102) and positioned to direct a fuel-air mixture out of the fuel injector assembly (102).

2. The fuel injector assembly (102) of claim 1, wherein the fuel line (106) comprises a main cross-sectional area and a pre-orifice (112) structure (110) disposed therein, the pre-orifice (112) structure (110) having an orifice cross-sectional area that is less than the main cross-sectional area.

3. The fuel injector assembly (102) of claim 1 or 2, wherein the center body (118) defines a channel (144) along an entire length thereof for routing a purge air toward the fuel injector outlet (130).

4. The fuel injector assembly (102) of claim 1, 2 or 3, further comprising a converging region (134) of the inner wall (132) located proximate the fuel injector outlet (130).

5. The fuel injector assembly (102) of claim 4, wherein a radially innermost surface (136) of the fuel injector assembly (102) is coated with a thermal barrier coating (138).

6. The fuel injector assembly (102) of any preceding claim, wherein an outlet end region (140) of the center body (118) is angled radially inwardly.

7. The fuel injector assembly (102) of any preceding claim, wherein the shroud (116) comprises a circular geometry.

8. The fuel injector assembly (102) of claim 7, wherein the fuel manifold (122) extends circumferentially within the shroud (116).

9. An axially stage fuel injection system (100), comprising:
a fuel line (106) comprising a pre-orifice (112) disposed within the fuel line (106) at a location upstream an outlet of the fuel line (106), the pre-orifice (112) having an orifice cross-sectional area that is less than a main cross-sectional area of the fuel line (106) upstream from the pre-orifice (112);
a fuel injector assembly (102) comprising:
a shroud (116) defining a fuel manifold (122) therein, wherein the fuel manifold (122) is in fluid communication with the fuel line (106) to receive a fuel therefrom;
a center body (118) defining a channel (144) extending axially along an entire length of the center body (118) for routing a purge airflow therethrough;
a plurality of vanes (120) operatively coupling the center body (118) to the shroud (116), the plurality of vanes (120) circumferentially spaced from each other to define at least one passage (124) therebetween for routing of air therethrough, each of the plurality of vanes (120) having at least one outlet hole (128) in fluid communication with the fuel manifold (122) and the at least one passage (124) for expulsion of the fuel into the at least one passage (124) for mixing with the air;
a fuel injector outlet (130) defined by an inner wall (132) of the fuel injector assembly (102) and positioned to direct a fuel-air mixture out of the fuel injector assembly (102); and
a converging region (134) of the inner wall (132) located proximate the fuel injector outlet (130).

10. The axially staged fuel injector system (100) of claim 9, wherein a radially innermost surface (136) of the fuel injector assembly (102) is coated with a thermal barrier coating (138).

11. The axially staged fuel injector system (100) of claim 9 or 10, wherein an outlet end of the center body (118) is angled radially inwardly.

12. The axially staged fuel injector system (100) of claim 9, 10 or 11, wherein the shroud (116) comprises a circular geometry.

13. The axially staged fuel injector system (100) of claim 12, wherein the fuel manifold (122) extends circumferentially within the shroud (116).
